# EUROPEAN PATENT APPLICATION

(11) **EP 3 744 483 A1**
(43) Date of publication of application: **02.12.2020**
(21) Application number: 19743361.8
(22) Date of filing: 22.01.2019
(51) Int. Cl.: B25J 9/22, G05B 19/42

(54) **ROBOT INSTRUCTION DEVICE**

(30) Priority: 25.01.2018 JP 2018010445; 21.05.2018 JP 2018097118
(71) Applicant: Kawasaki Jukogyo Kabushiki Kaisha, Kobe-shi, Hyogo 650-8670 (JP)
(72) Inventor: YOSHIMURA, Takayuki, Kobe-shi, Hyogo 650-8670 (JP); KANBARA, Masayoshi, Kobe-shi, Hyogo 650-8670 (JP)
(74) Representative: Arnold & Siedsma
(86) International application number: PCT/JP2019/001825
(87) International publication number: WO 2019/146586

(57) **Abstract**

The present disclosure is to provide a teaching device for a robot, which includes a voice input part, a voice recognition part, a specific-word extraction part configured to extract a specific word matching with a word recognized by the voice recognition part, and an operation command generation part configured to generate an operation command for the robot based on operational information associated with the specific word extracted by the specific-word extraction part. The specific word includes a first word for specifying a pitch corresponding to a moving distance when the robot is moved in a given direction from a specified location, and a second word for specifying a moving direction of the robot. When the pitch specified by the first word is not updated and the moving direction of the robot is specified by the second word, the operation command generation part generates the operation command so that the robot is moved in the specified direction at the specified pitch.

## Description

### TECHNICAL FIELD

The present disclosure relates to a teaching device for a robot.

### BACKGROUND ART

Generally, there is a direct teaching method as a method of teaching a robot a work. In this direct teaching method, an operator holds a tip end of the robot, moves the robot to a desired location or makes the robot to take a desired posture, and causes the robot to store this location or posture to teach the robot the operation. The operator needs to operate a teaching pendant in addition to the direct movement of the robot to the instructed location. The teaching pendant has an inching mode in which the robot is moved in a desired direction by a remote operation. In the inching mode, the operator must watch the teaching pendant while watching the robot because he/she uses operation keys of the teaching pendant.

In recent years, in order to reduce the operator's burden, teaching devices for robots which perform the inching by an audio input have been proposed (see Patent Documents 1 and 2).

### [Reference Documents of Conventional Art]

### [Patent Documents]

- [Patent Document 1]: JP2003-080482A
- [Patent Document 2]: JP2005-088114A

### DESCRIPTION OF THE DISCLOSURE

### [Problem to be Solved by the Disclosure]

However, in the above-described conventional art, when performing the inching with voice without using the teaching pendant, the operator speaks, for example, as "6 mm positive in the X-axis direction" or "2 mm negative in the Z-axis direction." Generally, the speech recognition rate has tendency that the recognition takes more time and causes more errors as the speech becomes longer.

The present disclosure is made in view of solving the above problem, and one purpose thereof is to improve a speech-recognition accuracy of an audio input in an inching mode of a robot.

### [Summary of the Disclosure]

In order to solve the described issue, a teaching device for a robot according to one aspect of the present disclosure is provided, which is configured to teach the robot an operation and includes a voice input part configured to accept an input of voice of an operator, a voice recognition part configured to recognize the voice of the operator inputted into the voice input part, a memory part configured to store beforehand a specific word associated with operation of the robot, a specific-word extraction part configured to extract from the memory part the specific word matching with a word recognized by the voice recognition part, and an operation command generation part configured to generate an operation command for the robot based on operational information associated with the specific word extracted by the specific-word extraction part. The specific word includes a first word for specifying a pitch corresponding to a moving distance when the robot is moved in a given direction from a specified location, and a second word for specifying a moving direction of the robot. When the pitch specified by the first word is not updated and the moving direction of the robot is specified by the second word, the operation command generation part generates the operation command so that the robot is moved in the specified direction at the specified pitch.

According to this configuration, when the operator utters to the voice input part (e.g., microphone) in an inching mode, the voice recognition part recognizes the voice of the operator inputted into the voice input part, and the specific-word extraction part extracts from the memory part the specific word matching with the word recognized by the voice recognition part. The operation command generation part generates the operation command for the robot based on the operational information (specify command) associated with the specific word extracted by the specific-word extraction part. Here, the specific word includes a word for specifying a pitch when the robot is moved in a given direction from a specified location by a direct teaching etc., and a word for specifying the moving direction of the robot. Thus, when the specific-word extraction part extracts the second word followed by the first word, the pitch specified by the first word is not updated and the moving direction of the robot is specified by the second word. In this case, the operation command is generated so that the robot is moved in the specified direction at the specified pitch. Therefore, the moving pitch can be specified by the audio input (e.g., the operator utters "PITCH 2MM"), and then, the moving direction of the robot can be specified (e.g., the operator utters "RIGHT, RIGHT, RIGHT, DOWN"). Since the utterance by the operator each time becomes shorter, the precision of the speech recognition improves.

The specific word may further include a third word easy to utter for moving the robot forward or backward in the specified direction at the specified pitch. When the pitch specified by the first word is not updated and the moving direction of the robot is specified by the second word, the operation command generation part may generate the operation command so that the robot is moved forward or backward by the third word in the specified direction at the specified pitch.

According to this configuration, since the specific word includes the third word easy to utter, the robot can be moved forward or backward in the specified direction at the specified pitch by this word easy to utter after the moving direction of the robot is specified. For example, suppose that "2MM" is specified as the pitch and "30 DEGREES UPPER RIGHT" is specified as the direction. Then, without the pitch and the direction being updated, when the operator speaks once "GO," the robot moves upward and rightward by 2 mm. Further, without the pitch and the direction being updated, when the operator speaks once "BACK," the robot moves upward and rightward by -2 mm. That is, it moves 30 degrees downward and leftward by 2 mm. Further, without the pitch and the direction being updated, when the operator speaks "GO, GO, GO," the robot moves upward and rightward by the total of 6 mm. Thus, since the robot is moved forward or backward with the easy-to-utter word, the precision of the speech recognition improves.

The first word may include an ambiguous expression for specifying a pitch when the robot is moved in a given direction from a specified location. The memory part may store beforehand a numeric value and a unit thereof corresponding to the ambiguous expression so as to be associated with the ambiguous expression. When the moving direction specified by the second word is not updated and the pitch of the robot is specified by the numeric value and the unit corresponding to the ambiguous expression, the operation command generation part may generate the operation command so that the robot is moved in the specified moving direction at the specified pitch.

The robot may have a plurality of robotic arms. The specific word may further include a word for specifying a robotic arm to be used as a target of movement among the plurality of robotic arms.

According to this configuration, one robotic arm to be used as the target of movement among the plurality of robotic arms can be specified by the utterance (e.g., "UPPER ARM," "LOWER ARM," "BOTH ARMS").

The teaching device may teach the robot the operation by the direct teaching.

### [Effects of the Disclosure]

The present disclosure has the configuration described above so that a speech-recognition accuracy of an audio input in an inching mode of a robot can be improved.

### BRIEF DESCRIPTION OF DRAWINGS

Fig. 1 is a block diagram illustrating a configuration of a teaching device for a robot according to one embodiment.
Fig. 2 is a table illustrating one example of specific words extracted by a speech recognition.
Fig. 3 is a view illustrating a situation of a teaching work of the robot.
Fig. 4 is a schematic diagram illustrating flows of signals in the teaching work of the robot.
Fig. 5 is a table illustrating other examples of the specific words extracted by the speech recognition.

### MODE FOR CARRYING OUT THE DISCLOSURE

Hereinafter, a desirable embodiment is described with reference to the drawings. Note that, below, the same reference characters are assigned to the same or corresponding components throughout the drawings to omit redundant description. Moreover, the drawings are to schematically illustrate the components to facilitate understandings.

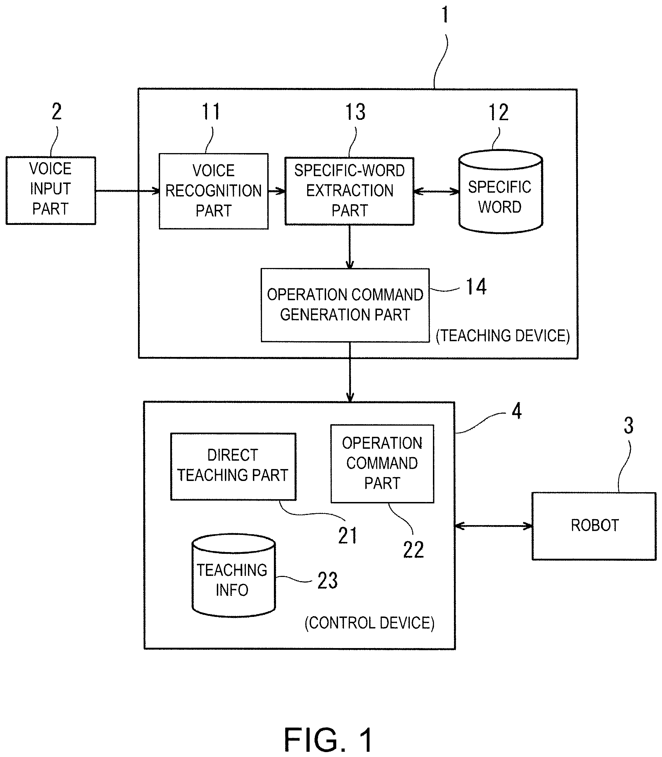

Fig. 1 is a block diagram illustrating a configuration of a teaching device for a robot according to one embodiment of the present disclosure. A teaching device 1 is a teaching device for the robot for teaching a robot 3 operation by a direct teaching. In this embodiment, the teaching device 1 is provided with a speech recognition function, and is comprised of a teaching terminal communicatably connected to a control device 4 of the robot. The teaching device 1 is connected to a microphone (voice input part) 2 which collects voice uttered by an operator 50. The microphone 2 is desirable to be provided with a noise shield means which reduces an input of sound other than the voice uttered by the operator 50. Such a noise shield means may include a reflecting plate which reflects the voice uttered from the mouth of the operator 50 and collects the voice in the microphone, and an insulating member which interrupts the sound from a direction other than the mouth of the operator 50. Further, the noise shield means is also desirable to use a directional microphone having high sensibility for the voice from the direction of the mouth of the operator 50. Alternatively, a bone conductive microphone which collects bone conducting sound of the operator 50 is also suitably used. Such microphones eliminate noise at a location where the robot 3 is installed, such as a production line of a factory, and clearly collect the voice of the operator 50.

The teaching device 1 includes a voice recognition part 11 which recognizes the voice of the operator inputted into the microphone 2, a memory part 12 which stores beforehand specific word(s) associated with operation of the robot 3, a specific-word extraction part 13 which extracts from the memory part 12 the specific word which matches with the word recognized by the voice recognition part 11, and an operation command generation part 14 which creates an operation command for the robot based on operational information (specify command) associated with the specific word extracted by the specific-word extraction part 13. Here, the teaching device 1 is a computer provided with, for example, one or more processors, a memory, an input/output interface, and a communication interface. The voice recognition part 11, the specific-word extraction part 13, and the operation command generation part 14 are functional blocks implemented by the processor executing a given program.

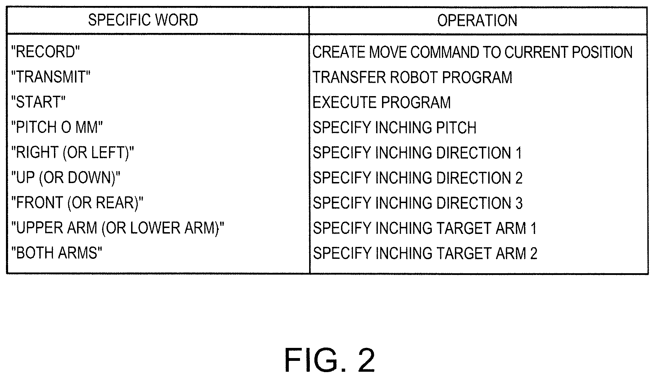

The memory part 12 stores beforehand the specific words to be extracted by a speech recognition, various data, such as the commands, related to the robot operation associated with the respective specific words, and other speech recognition processing programs. Fig. 2 is a chart illustrating examples of the specific words to be extracted by the speech recognition. As illustrated in Fig. 2, each specific word(s) is associated with operation of the robot 3. For example, a specific word "RECORD" is associated with "a command for creating a move command to a current position" in a teaching mode. The specific word "TRANSMIT" is associated with "a program transfer command of the robot" generated in the teaching mode. The specific word "START" is associated with "a program execution command" in a playback mode. The specific word "PITCH oo MM" is associated with "a pitch specify command" in an inching mode. This is a word which specifies a pitch when moving the robot in a given direction from the location specified by the direct teaching, ○○ corresponds to a numeric value. The specific word "RIGHT (OR LEFT)" is associated with "a specify command to the right or to the left in the moving direction" of the robot in the inching mode. The specific word "UP (OR DOWN)" is associated with "a specify command to upward or downward in the moving direction" of the robot in the inching mode. The specific word "FRONT (OR REAR)" is associated with "a specify command to forward or rearward in the moving direction" of the robot in the inching mode. The specific words "UPPER ARM (OR LOWER ARM)" and "BOTH ARMS" are associated with "a command for specifying a target arm" in the inching mode of a dual-arm robot.

The specific-word extraction part 13 extracts from the memory part 12 the specific word which matches with the word recognized by the voice recognition part 11. The operation command generation part 14 generates the operation command for the robot based on the operational information (specify command) associated with the specific word extracted by the specific-word extraction part 13, and outputs it to the control device 4.

The robot 3 has one of the teaching mode for teaching the operation based on the operation command from the control device 4 and the playback mode for automatically performing the taught operation. The robot 3 is connected to the control device 4. The control device 4 is a robot controller provided with, for example, an arithmetic processor, a servo amplifier, a memory, an input/output interface, and a communication interface. The control device 4 includes a direct teaching part 21, an operation command generation part 22, and a memory part 23. The direct teaching part 21 detects a location or a posture of the robot which is led by the operator 50 in the teaching mode, and stores in the memory part 23 teaching information, such as a teaching point. The operation command generation part 22 transmits to the robot 3 a signal commanding operation of the robot 3 based on the operation command from the teaching device 1 in the teaching mode. In the playback mode, a signal for commanding operation of the robot 3 in order to perform a playback of the taught operation program etc. is transmitted to the robot 3. The memory part 23 stores teaching information, such as the operation program generated in the teaching mode.

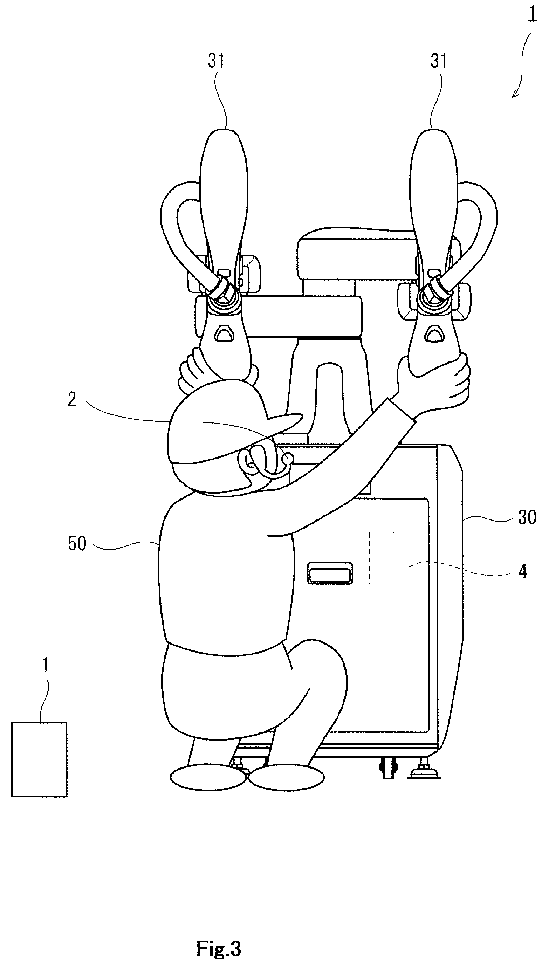

Next, the direct teaching of the robot 3 by the teaching device 1 is described. Fig. 3 is a view illustrating a situation of a teaching work of the robot 3. As illustrated in Fig. 3, the robot 3 is the dual-arm robot having a pair of robotic arms 31 supported by a base 30. The robot 3 is installed in a limited space corresponding to a size of one person (e.g., 610 mm x 620 mm). In the teaching mode, the location and posture of the robotic arm 31 (angles of each joint and a tip end of the arm) are manually operated by the operator 50. Moreover, in this embodiment, since the operator 50 wears the microphone 2 which hands-free collects the voice uttered by the operator 50, he/she can operate the robot 3 by the audio input.

The operator 50 grabs the tip end of the robotic arm 31, and moves the robotic arm 31 to a desired location or changes it to take a desired posture, and this location or posture is stored. Here, when the operator 50 utters the word "RECORD," the teaching device 1 recognizes the voice of the operator 50 inputted into the microphone 2 by the voice recognition part 11. The specific-word extraction part 13 extracts from the memory part 12 the specific word which matches with the word recognized by the voice recognition part 11 (see Fig. 2). Here, the specific-word extraction part 13 extracts from the memory part 12 "the command for creating the move command to the current position" associated with the specific word "RECORD," and outputs it to the operation command generation part 14. The operation command generation part 14 generates the operation command for the robot based on "the command for creating the move command to the current position," and outputs it to the control device 4. The control device 4 receives the operation command, and the current position or posture of the robot is stored in the memory part 23.

Moreover, the teaching device 1 of this embodiment can perform by the audio input the inching mode in which the robot is moved to a given direction from the location and posture of the robot which are registered by the direct teaching. The memory part 12 stores a word which specifies a pitch when moving the robot in the given direction from the location specified by the direct teaching, and a word which specifies the moving direction of the robot. As illustrated in Fig. 2, the specific word(s) "PITCH ○○ MM" is associated with "the pitch specify command" in the inching mode. The specific word "RIGHT (OR LEFT)" is associated with "the specify command to the right or to the left in the moving direction" of the robot in the inching mode.

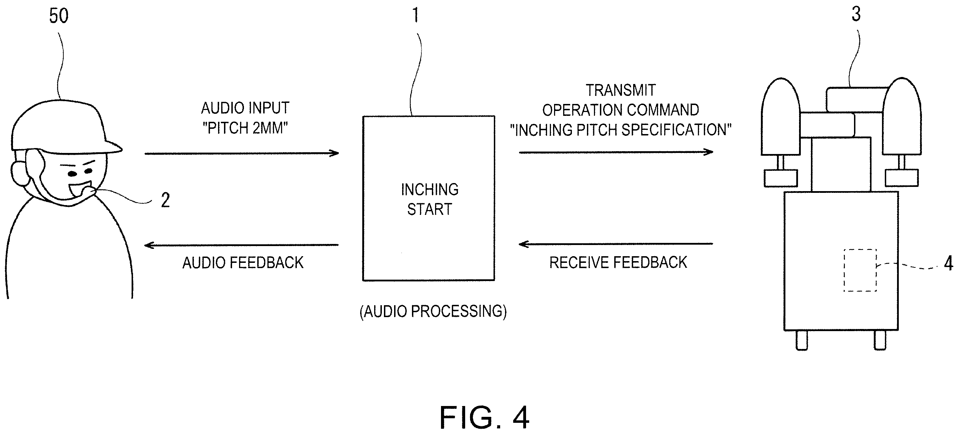

Fig. 4 is a schematic diagram illustrating flows of signals in robot operation by the audio input. As illustrated in Fig. 4, when the operator 50 utters the words of "PITCH 2MM," the teaching device 1 recognizes the voice of the operator 50 inputted into the microphone 2 by the voice recognition part 11. The specific-word extraction part 13 extracts from the memory part 12 the specific words which match with the words recognized by the voice recognition part 11 (see Fig. 2). Here, the specific-word extraction part 13 extracts from the memory part 12 "the pitch specify command" associated with the specific words "PITCH ○○ MM," and outputs it to the operation command generation part 14. The operation command generation part 14 generates the operation command for the robot based on "the pitch specify command," and outputs it to the control device 4. The control device 4 receives the operation command and the pitch in the inching mode is specified. The specified pitch is stored in the memory part 23.

Next, when the operator 50 utters the word "RIGHT," "RIGHT," "RIGHT," and "DOWN," the teaching device 1 recognizes the voice of the operator 50 inputted into the microphone 2 by the voice recognition part 11. The specific-word extraction part 13 extracts from the memory part 12 the specific word which matches with the word recognized by the voice recognition part 11 (see Fig. 2). Here, after the specific-word extraction part 13 extracts three times from the memory part 12 "the specify command to the right in the moving direction" associated with the specific word "RIGHT," it extracts once "the specify command to downward in the moving direction" associated with the specific word "DOWN," and outputs them to the operation command generation part 14.

The operation command generation part 14 generates the operation command for the robot based on the three "specify commands to the right in the moving direction" and one "specify command to downward in the moving direction," and outputs it to the control device 4. The control device 4 receives the operation command, refers to the pitch (2 mm) stored in the memory part 23 based on the received operation command, and moves the robot to 6 mm to the right and 2 mm to downward in the inching mode. Thus, when the moving direction of the robot is specified without the specified pitch (2 mm) being updated, the operation command generation part 14 generates the operation command so that the robot is moved in the specified direction at the specified pitch.

Therefore, according to this embodiment, since the utterance by the operator 50 each time becomes shorter in the inching mode using the audio input, the recognition precision of the speech recognition improves.

Note that, in this embodiment, once the pitch is specified, when only the word indicative of the direction is uttered without the pitch being updated, the robot is moved in the uttered direction by a distance corresponding to the pitch. However, it is sometimes difficult to repeatedly utter the word indicative of the direction. For example, "RIGHT" is not so difficult to utter repeatedly, but the words "30 DEGREES UPPER RIGHT" are difficult to utter repeatedly.

Thus, the specific word further includes a word easy to utter for moving the robot forward or backward in the specified direction at the specified pitch, and after the moving direction of the robot is specified, the robot may be moved in the specified direction at the given pitch by the easy-to-utter word.

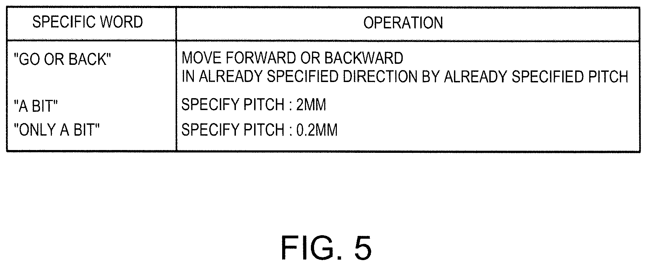

Fig. 5 is a table illustrating other examples of the specific words extracted by the speech recognition. As illustrated in Fig. 5, the easy-to-utter word for moving the robot forward or backward is "GO OR BACK." Since these words have one vowel, utterance of these words is easier to be recognized by the speech recognition. For example, suppose that 2 mm is specified as the pitch and "30 DEGREES UPPER RIGHT" is specified as the direction. Then, without the pitch and the direction being updated, when the operator speaks once "GO," the robot moves upward and rightward by 2 mm. Further, without the pitch and the direction being updated, when the operator speaks once "BACK," the robot moves upward and rightward by -2 mm (i.e., it moves 30 degrees downward and leftward by 2 mm). Further, without the pitch and the direction being updated, when the operator speaks "GO, GO, GO," the robot moves upward and rightward by the total of 6 mm

That is, when the operator utters the word "GO" and the teaching device recognizes it, the operation command for moving the robot in the direction already specified by a distance corresponding to the pitch already specified is generated. Moreover, when the operator utters the word "BACK" and the teaching device 1 (voice recognition part 11) recognizes it, the operation command for moving the robot in the direction opposite to the direction already specified by a distance corresponding to the pitch already specified is generated. Thus, since the robot is moved forward or backward with the easy-to-utter word, the recognition precision of the speech recognition improves.

Note that although in this embodiment the robot is moved in the specified direction at the specified pitch when the moving direction of the robot is specified without the specified pitch being updated, the robot may be moved in the specified moving direction at the specified pitch, when the pitch is specified without the specified moving direction being updated. For example, when the right is specified as the moving direction, and the operator utters the word "2 MM" without the moving direction being updated, the operation command for moving the robot rightward by 2 mm may be generated. Further, when the operator utters the word "0.2 MM" without the moving direction being changed, the operation command for moving the robot rightward by 0.2 mm may be generated.

The word for specifying the pitch may be "2 MM" and "0.2 MM" which include a concrete numeric value, and as illustrated in Fig. 5, it may be "A BIT," "ONLY A BIT," "LITTLE MORE," and "JUST LITTLE MORE" which include an ambiguous expression. These words are registered (stored) and a relation of the concrete pitch (a numeric value and its unit) corresponding to each word is also registered (stored). For example, the words "A BIT" and "ONLY A BIT" are registered (stored) and 2 mm and 0.2 mm are associated with them as the pitches corresponding to the words. That is, the word "A BIT" is associated with the pitch of 2 mm and the word "ONLY A BIT" is associated with the pitch of 0.2 mm. For example, when the right is already specified as the moving direction and the operator utters the word "A BIT" without the moving direction being updated, the operation command for moving the robot rightward by 2 mm is generated. Further, when the operator utters the word "ONLY A BIT" without the moving direction being changed, the operation command for moving the robot rightward by 0.2 mm is generated. Further, when the operator utters "A BIT, ONLY A BIT, ONLY A BIT" without the moving direction being changed, the robot moves rightward by the total of 2.4 mm. In the human's ordinary conversation, various degrees are expressed by using ambiguous expressions in many cases. Therefore, if the word includes the ambiguous expression rather than the concrete numeric value, the operator is easier to specify the pitch in his/her intuitive sense.

Note that since the robot 3 is the dual-arm robot having the two robotic arms 31, one robotic arm may be specified by the audio input in the inching mode as a moving target. For example, the operator 50 can specify the robotic arm 31 which becomes the inching target by uttering either the "UPPER ARM," the "LOWER ARM" or "BOTH ARMS."

Note that although in this embodiment the teaching device 1 is to teach the robot the operation by the direct teaching, it may be to teach the robot operation by other teaching.

It is apparent for the person skilled in the art that many improvements and other embodiments of the present disclosure are possible from the above description. Therefore, the above description is to be interpreted only as illustration, and it is provided in order to teach the person skilled in the art the best mode that implements the present disclosure. The details of the configuration and/or the function may be changed substantially without departing from the spirit of the present disclosure.

### INDUSTRIAL APPLICABILITY

The present disclosure is useful for teaching the robot.

### DESCRIPTION OF REFERENCE CHARACTERS

- 1: Teaching Device
- 2: Microphone (Voice Input Part)
- 3: Robot
- 4: Control Device (Robot Controller)
- 11: Voice Recognition Part
- 12: Memory Part
- 13: Specific-Word Extraction Part
- 14: Operation Command Generation Part
- 21: Direct Teaching Part
- 22: Operation Command Part
- 23: Memory Part
- 31: Robotic Arm
- 50: Operator

## Claims

1. A teaching device for a robot configured to teach the robot an operation, comprising:
a voice input part configured to accept an input of voice of an operator;
a voice recognition part configured to recognize the voice of the operator inputted into the voice input part;
a memory part configured to store beforehand a specific word associated with operation of the robot;
a specific-word extraction part configured to extract from the memory part the specific word matching with a word recognized by the voice recognition part; and
an operation command generation part configured to generate an operation command for the robot based on operational information associated with the specific word extracted by the specific-word extraction part,
wherein the specific word includes a first word for specifying a pitch corresponding to a moving distance when the robot is moved in a given direction from a specified location, and a second word for specifying a moving direction of the robot, and
wherein when the pitch specified by the first word is not updated and the moving direction of the robot is specified by the second word, the operation command generation part generates the operation command so that the robot is moved in the specified direction at the specified pitch.

2. The teaching device of claim 1, wherein the specific word further includes a third word easy to utter for moving the robot forward or backward in the specified moving direction at the specified pitch, and
wherein when the pitch specified by the first word is not updated and the moving direction of the robot is specified by the second word, the operation command generation part generates the operation command so that the robot is moved forward or backward by the third word in the specified direction at the specified pitch.

3. The teaching device of claim 1 or 2, wherein the first word includes an ambiguous expression for specifying a pitch when the robot is moved in a given direction from a specified location,
wherein the memory part stores beforehand a numeric value and a unit thereof corresponding to the ambiguous expression so as to be associated with the ambiguous expression, and
wherein when the moving direction specified by the second word is not updated and the pitch of the robot is specified by the numeric value and the unit corresponding to the ambiguous expression, the operation command generation part generates the operation command so that the robot is moved in the specified moving direction at the specified pitch.

4. The teaching device of any one of claims 1 to 3, wherein the robot has a plurality of robotic arms, and
wherein the specific word further includes a word for specifying a robotic arm to be used as a target of movement among the plurality of robotic arms.

5. The teaching device of any one of claims 1 to 4, wherein the teaching device teaches the robot the operation by a direct teaching.
